# EUROPEAN PATENT APPLICATION

(11) **EP 4 653 106 A1**
(43) Date of publication of application: **26.11.2025**
(21) Application number: 25173546.0
(22) Date of filing: 30.04.2025
(51) Int. Cl.: B21D 22/02, B21D 37/16, B21D 53/88, B60G 7/00, B21D 19/08

(54) **SUSPENSION ARM MEMBER AND METHOD OF MANUFACTURING THE SAME**

(30) Priority: 20.05.2024 JP 2024082082
(71) Applicant: TOYOTA JIDOSHA KABUSHIKI KAISHA, Toyota-shi, Aichi-ken 471-8571 (JP)
(72) Inventor: IHARA, Tomoaki, Toyota-shi 471-8571 (JP); SHIBATA, Motoyuki, Toyota-shi 471-8571 (JP); KISHI, Nobuyuki, Toyota-shi 471-8571 (JP); YAMADA, Shota, Toyota-shi 471-8571 (JP); HIJII, Takumi, Toyota-shi 471-8571 (JP)
(74) Representative: D Young & Co LLP

(57) **Abstract**

Disclosed is a suspension arm member and a method of manufacturing the same, the method including forming, by molding, a cylindrical part into which a bushing is to be press-fitted without having to perform welding of a steel pipe member whereby difficulty in manufacturing the suspension arm member can be greatly reduced. In a suspension arm member according to an aspect of the present disclosure, a main body part (1) and a cylindrical part (2) for press-fitting a bushing therein are made of one steel plate, and the cylindrical part (2) is formed by burring a periphery part of a through-hole (12) provided in a side wall part (11), the side wall part (11) being erected in the pressed direction of the main body part (1).

## Description

### BACKGROUND

The present disclosure relates to a suspension arm member and a method of manufacturing the same.

For example, a vehicle lower arm disclosed in Patent Literature 1 is manufactured by welding a steel pipe member to a main body part which is made of a press-molded steel plate, the steel pipe member being formed for press-fitting a bushing therein.

Patent Literature 1: Japanese Unexamined Patent Application Publication No. 2015-137037

### SUMMARY

In a suspension arm member, such as the above-mentioned lower arm, it is required to weld a steel pipe member perpendicularly to the direction in which the main body part is pressed (hereinafter referred to as the pressed direction) when welding the steel pipe member to the main body part. In this case, the steel pipe member is welded after the welding part of the steel pipe is processed in a separate process, which is a cause of difficulty in manufacturing the vehicle lower arm in terms of ensuring dimensional accuracy in processing the welding part of the steel pipe, ensuring welding quality in welding the steel pipe member, the shape of the lower arm being a shape which is difficult to mold, and so on.

The present disclosure has been made in view of the above circumstances, and provides a suspension arm member that can be readily manufactured and a method of manufacturing the same.

A suspension arm member according to an aspect of the present disclosure includes:
a main body part made of a press-molded steel plate; and
a cylindrical part provided in the main body part for press-fitting a bushing therein in a direction perpendicular to a pressed direction of the main body part,
in which the main body part and the cylindrical part are made of one steel plate, and
in which the cylindrical part is formed by burring a periphery part of a through-hole provided in a side wall part, the side wall part being erected in the pressed direction of the main body part.

In the suspension arm member according to an aspect of the present disclosure, the main body part and the cylindrical part for press-fitting a bushing therein are made of one steel plate, and the cylindrical part is formed by burring the periphery part of the through-hole provided in the side wall part, the side wall part being erected in the pressed direction of the main body part. Therefore, there is no need to perform welding of the cylindrical part, i.e., a steel pipe member, for press-fitting a bushing therein, and the suspension arm member can be readily manufactured.

A method of manufacturing a suspension arm member according to an aspect of the present disclosure includes:
press-molding a steel plate;
providing a through-hole in the steel plate;
performing local induction heating on a periphery part of the through-hole;
performing burring on the periphery part of the through-hole to form a cylindrical part for press-fitting a bushing therein; and
bending a part of the steel plate in which the cylindrical part is formed to thereby form a side wall part erected in a pressed direction.

In the method of manufacturing the suspension arm member according to an aspect of the present disclosure, after performing local induction heating on the periphery part of the through-hole provided in the steel plate, burring is performed on the periphery part of the through-hole to form the cylindrical part for press-fitting a bushing therein, and then a part of the steel plate in which the cylindrical part is formed is bent to thereby form a side wall part erected in a pressed direction. Therefore, there is no need to perform welding of the cylindrical part, i.e., a steel pipe member, for press-fitting a bushing therein, and the suspension arm member can be readily manufactured.

In forming the cylindrical part, induction heating of the periphery part of the through-hole and burring of the periphery part of the through-hole are repeated whereby the cylindrical part is extended. With this configuration, the length of the cylindrical part long enough to support the bushing can be secured.

The present disclosure provides a method of manufacturing a suspension arm member that can be readily manufactured and a method of manufacturing the same.

The above and other objects, features and advantages of the present disclosure will become more fully understood from the detailed description given hereinbelow and the accompanying drawings.

### BRIEF DESCRIPTION OF DRAWINGS

Fig. 1 is a schematic perspective view of a suspension arm member according to the present disclosure;
Fig. 2 is a schematic side view of a suspension arm member according to the present disclosure; and
Fig. 3 is a flowchart showing a method of manufacturing a suspension arm member according to an embodiment of the present disclosure.

### DESCRIPTION OF EMBODIMENTS

Specific embodiments of the present disclosure will be described below in detail with reference to the drawings. However, the present disclosure is not limited to the following embodiments. In order to clarify the explanation, the following descriptions and drawings are simplified as appropriate.

### < Configuration of suspension arm member >

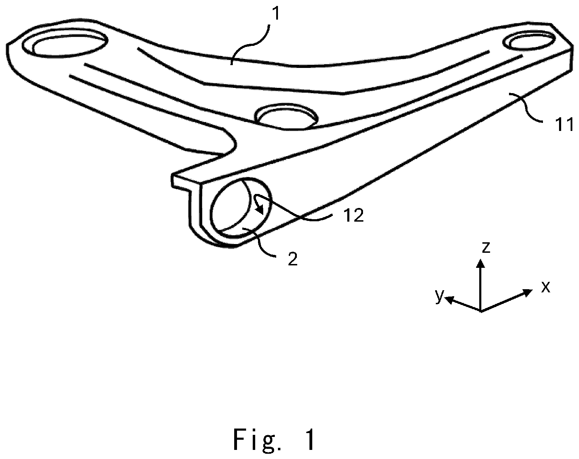

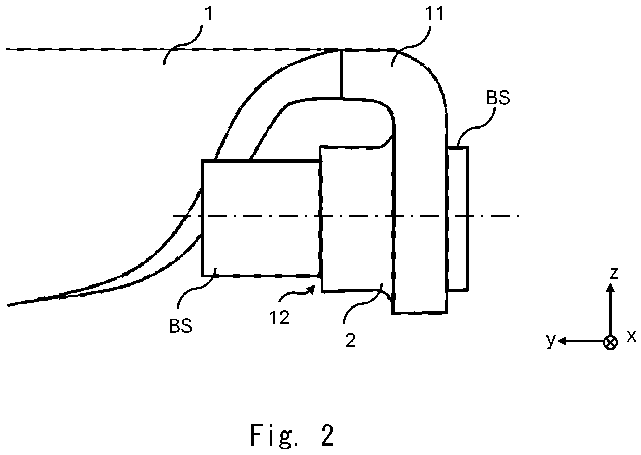

First, a configuration of a suspension arm member according to an aspect of the present disclosure will be described with reference to Figs. 1 and 2. Fig. 1 is a schematic perspective view of a suspension arm member according to the present disclosure. Fig. 2 is a side view of Fig. 1. The type of the suspension arm is not particularly limited, but examples include a front lower arm, a front upper arm, a rear lower arm, a rear upper arm, a trailing arm, and the like. Fig. 1 shows a schematic perspective view of a front lower arm as an example.

The right-handed xyz orthogonal coordinate systems shown Figs. 1 and 2 are shown for the sake of convenience in illustrating the positional relationship of the structural components. In Figs. 1 and 2, the z-axis positive direction denotes a vertically upward direction, and the xy plane denotes a horizontal plane, which are common throughout the drawings.

The suspension arm member shown in Fig. 1 includes a main body part 1 made of a press-molded steel plate and a cylindrical part 2 provided in the main body part for press-fitting a bushing therein in a direction perpendicular to the pressed direction of the main body part (in the y-axis positive direction). The cylindrical part 2 is formed in the periphery of a through-hole 12 provided in a side wall part 11 erected in the pressed direction of the main body part 1.

The main body part 1 and the cylindrical part 2 are made of one steel plate. The external shape of the main body part 1 may be changed as necessary to satisfy its function as a suspension arm. For example, in Fig. 1, the external shape of the main body is an L-shape extending in the x-axis positive direction and the y-axis positive direction, unevenness is provided over the entire surface of the main body part, and a plurality of holes are provided for the purpose of weight reduction, stress dispersion, connection with other parts, etc. However, the configuration of the external shape, the presence/absence of unevenness, the size and number of holes, etc. is not limited to those illustrated in Fig. 1.

The cylindrical part 2 is provided on the side wall part 11. The cylindrical part 2 is formed by repeating induction heating and burring on the periphery part of the through-hole 12. In Fig. 2, the cylindrical part 2 is extended in the y-axis positive direction, but it may be extended in the y-axis negative direction, and the extension direction is uniquely determined by the direction in which a bushing BS is press-fitted as the press-fitting direction of the bushing BS. The length of the cylindrical part 2 in the y-axis direction may be as long as it can support the bushing BS, for example, 10 to 15 mm, although it is not particularly limited thereto. In Fig. 1, the cylindrical part 2 is formed at the end of the side wall part 11, but it is not particularly limited thereto. In addition, the side wall part 11 may be provided with a plurality of the cylindrical parts 2.

The side wall part 11 is erected at a fixed angle in the z-axis direction with respect to the xy-plane in which the main body part 1 exists. In Fig. 2, the side wall part 11 is erected perpendicular to the main body part 1 (the z-axis negative direction), but the angle at which the side wall part 11 erected with respect to the main body part 1 may be changed as long as the cylindrical part 2 and the bushing BS pressed-fitted into the cylindrical part 2 do not interfere with the main body part 1 and the side wall part 11.

The through-hole 12 is formed by, for example, punching out the press-molded steel plate. The diameter of the through-hole 12 is determined according to the size of the bushing BS to be press-fitted.

As described above, in the suspension arm member according to an aspect of the present disclosure, the main body part 1 and the cylindrical part 2 for press-fitting a bushing therein are made of one steel plate, and the cylindrical part 2 is formed by burring the periphery part of the through-hole 12 provided in the side wall part 11, the side wall part 11 being erected in the pressed direction of the main body part 1. That is, in the suspension arm member according to an aspect of the present disclosure, there is no need to perform welding of the cylindrical part, i.e., the steel pipe member, for press-fitting a bushing therein, and therefore the suspension arm member can be readily manufactured.

### < Method of Manufacturing suspension arm member >

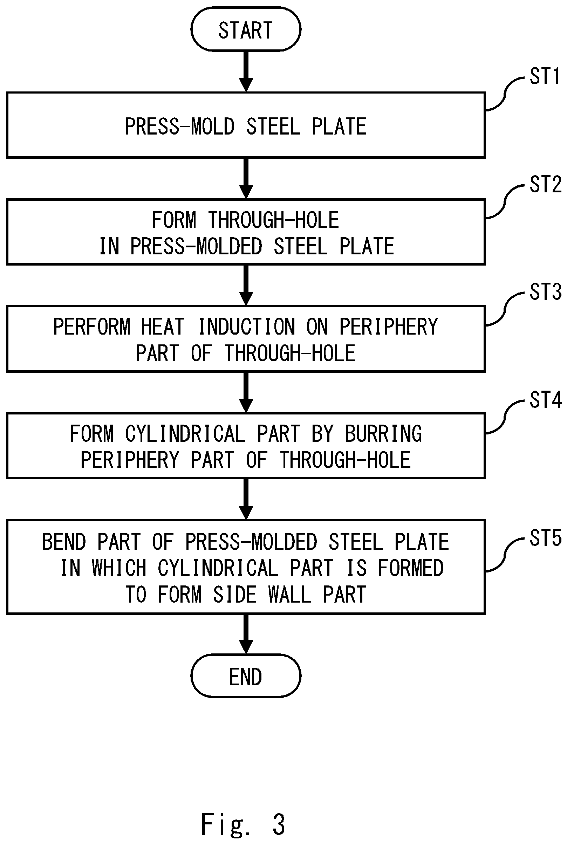

Next, a method of manufacturing a suspension arm member will be described with reference to Fig. 3. Fig. 3 is a flowchart showing a method of manufacturing a suspension arm member.

First, as described in Fig. 3, a steel plate is press-molded to thereby form the main body part 1 (Step ST1). At this time, the external shape of the main body part 1 is changed to satisfy its function as a suspension arm, and unevenness is provided thereto as necessary.

Next, as described in Fig. 3, the through-hole 12 is formed in the main body part 1 (Step ST2). The through-hole 12 is formed, for example, by punching out a press-molded steel plate.

Next, as described in Fig. 3, the periphery part of the through-hole 12 is induction heated (Step ST3). The heating conditions for performing induction heating are, for example, a heating temperature of about 500 to 830°C and a heating time of 10 seconds or less. However, the heating time may exceed 10 seconds.

Subsequently, as described in Fig. 3, the cylindrical part 2 is formed by burring the periphery part of the through-hole 12 (Step ST4). Here, in order to ensure the length of the cylindrical part 2 required to support the bushing, induction heating and burring of the periphery part of the through-hole 12 may be repeated whereby the cylindrical part 2 is extended. The number of times by which induction heating and burring are repeated is not particularly limited.

Finally, as described in Fig. 3, the main body part 1 in which the cylindrical part 2 is formed is bent to form the side wall part 11 including the cylindrical part 2 (Step ST5). At this time, whether the main body part 1 is bent with its surface on which the cylindrical part 2 is formed on the inside or the main body part 1 is bent with its surface on which the cylindrical part 2 is formed on the outside is not limited.

As explained above, in the method of manufacturing a suspension arm member according to an aspect of the present disclosure, the through-hole 12 is formed in the main body part 1 made of a press-molded steel plate, and the cylindrical part 2 is formed by burring a periphery part of the through-hole 12. That is, in the method of manufacturing a suspension arm member according to an aspect of the present disclosure, welding of the cylindrical part 2, i.e., the steel pipe member, for press-fitting a bushing therein is not required, and therefore the suspension arm member can be readily manufactured.

A program includes instructions (or software codes) that, when loaded onto a computer, causes the computer to perform one or more of the functions described in the embodiments. The program may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disc (DVD), Blu-ray disc or other optical disc storage, magnetic cassettes, magnetic tape, magnetic disk storage or other magnetic storage devices. The program may be transmitted on a transitory computer readable medium or a communication medium. By way of example, and not limitation, transitory computer readable media or communication media can include electrical, optical, acoustical, or other form of propagated signals.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A suspension arm member comprising:
a main body part (1) made of a press-molded steel plate; and
a cylindrical part (2) provided in the main body part (1) for press-fitting a bushing therein in a direction perpendicular to a pressed direction of the main body part (1),
wherein the main body part (1) and the cylindrical part (2) are made of one steel plate, and
wherein the cylindrical part (2) is formed by burring a periphery part of a through-hole (12) provided in a side wall part (11), the side wall part (11) being erected in the pressed direction of the main body part (1).

2. A method of manufacturing a suspension arm member, comprising:
press-molding a steel plate;
providing a through-hole (12) in the steel plate;
performing local induction heating on a periphery part of the through-hole (12);
performing burring on the periphery part of the through-hole (12) to form a cylindrical part (2) for press-fitting a bushing therein; and
bending a part of the steel plate in which the cylindrical part (2) is formed to thereby form a side wall part (11) erected in a pressed direction.

3. The method of manufacturing a suspension arm member according to claim 2, wherein in forming the cylindrical part (2), induction heating of the periphery part of the through-hole (12) and burring of the periphery part of the through-hole (12) are repeated whereby the cylindrical part (2) is extended.
